# EUROPÄISCHE PATENTSCHRIFT

(11) **EP 2 409 031 B1**
(45) Veröffentlichungstag und Bekanntmachung des Hinweises auf die Patenterteilung: **28.08.2013**
(21) Anmeldenummer: 10710552.0
(22) Anmeldetag: 22.03.2010
(51) Int. Cl.: F03D 11/04, H02G 3/00

(54) **WINDENERGIEANLAGE MIT VERDRILLBARER GONDEL-KABELFÜHRUNG**
WIND ENERGY PLANT HAVING A TWISTABLE NACELLE CABLE GUIDE
AÉROGÉNÉRATEUR AVEC UNE TRAVERSÉE DE CÂBLE DE NACELLE POUVANT ÊTRE TORSADÉE

(30) Priorität: 20.03.2009 DE 102009013728
(43) Veröffentlichungstag der Anmeldung: 25.01.2012
(73) Patentinhaber: REpower Systems SE, 22297 Hamburg (DE)
(72) Erfinder: SCHUBERT, Matthias, 24768 Rendsburg (DE)
(74) Vertreter: Glawe, Delfs, Moll
(86) Internationale Anmeldenummer: PCT/EP2010/001789
(87) Internationale Veröffentlichungsnummer: WO 2010/105852

(56) Entgegenhaltungen:
- EP-A1- 1 921 311
- JP-A- 2005 137 097
- JP-A- 2008 298 051

## Beschreibung

Die Erfindung betrifft eine Windenergieanlage mit einem Turm und einer Gondel, die oben auf dem Turm schwenkbar angeordnet ist. Von ihr führt eine Mehrzahl von Kabeln in den Turm, und zwar in Gestalt einer Schlaufe. Durch Verdrillung ermöglichen die Kabel das Verschwenken der Gondel in Azimuthrichtung.

Bei Windenergieanlagen der vorherrschenden Bauart mit horizontaler Rotorachse ist eine Ausrichtung zum Wind erforderlich. Dies geschieht derart, dass die Gondel gegenüber dem festen Turm in Azimuthrichtung geschwenkt wird, um so eine Nachführung zur Hauptwindrichtung zu erhalten. Im Betrieb werden dabei verschiedene Azimuthrichtungen in zufällig verteilter Folge entsprechend der stochastischen Windrichtungsverteilung angefahren. Häufig unternimmt die Gondel dabei mehr als eine vollständige Umdrehung relativ zum Turm. Dies stellt erhebliche Anforderungen an die elektrischen Übertragungseinrichtungen zwischen Turm und Gondel.

Es ist versucht worden, Drehübertrager nach dem Prinzip von Schleifringen zu verwenden (DE 20116756 U1). Sie bieten zwar den Vorteil einer theoretisch unbegrenzten Verdrehbarkeit, dieser Vorteil wird in der Praxis aber durch nicht zu vernachlässigenden Verschleiß aufgehoben. Dazu kommt, dass Schleifringe bei hohen Stromstärken, wie sie in den Leistungskabeln typischerweise auftreten, empfindlich sind gegenüber Verschmutzungen und dadurch erzeugten Widertandserhöhungen. Insgesamt haben sie sich daher für einen zuverlässigen Dauerbetrieb nicht bewährt.

Um diese Nachteile zu vermeiden, wird das Kabel selbst als Übertrager herangezogen, indem es in einer hängenden Schlaufe vom Turm in die Gondel geführt ist. Dank der Schlaufe ergibt sich eine gute Verdrillbarkeit des Kabels, wenn auch keine unbegrenzte Verdrehbarkeit. In der Praxis hat sich gezeigt, dass eine Auslegung auf eine Verdrehbarkeit der Gondel von zwei oder drei Umdrehungen in jede Richtung ausreicht. Sofern sich im Betrieb durch rückdrehende Winde nicht von selbst eine Entdrillung des Kabels ergibt, ist dann bei Erreichen eines maximalen Verdrehwinkels ein gesondertes Entdrillen durch Verschwenken der Gondel durchzuführen.

Die zweitgenannte Variante mit der Schlaufe hat sich weitgehend durchgesetzt. Es hat sich aber gezeigt, dass gerade bei leistungsstarken Windenergieanlagen mit einer Vielzahl von Kabeln die Schwierigkeit besteht, dass die einzelnen Kabel beim Verdrillen aneinander reiben und damit übermäßig verschleißen. Es entsteht dadurch die Gefahr einer Beschädigung der Kabel, wodurch es zu einer Schädigung der Windenergieanlage beispielsweise durch Kurzschluss kommen kann.

Um solche Beschädigungen zu vermeiden, ist es bekannt, sternförmige Abstandshalter für die Kabel vorzusehen (WO 00/36724 A2). An ihnen sich die Kabel eingespannt und sind somit in ihrer relativen Lage fixiert. Um ein Verdrillung des Kabelstrangs zu erlauben, ist eine Schlaufe gebildet, die mit ihrem oberen Ende an der Gondel und am anderen Ende am Turm gehalten ist. Weiter sind dazwischenliegende Abstandshalter vorgesehen, die jeweils über einen schwenkbaren Lenker an dem Turm befestigt sind und den Kabelstrang teilbeweglich führen. Die Lenker fordern viel Bauraum und sind aufwendig.

Weiter ist bekannt den Kabelstrang mittels einer Verdrillvorrichtung, die eine obere Abstandshalterplatte, die fest mit der Gondel verbunden ist, und einer unteren Abstandshalterplatte, die fest mit dem Turm verbunden ist, zu verdrillen (JP 2008-298051 A). Zwischen der oberen und der unteren Abstandshalterplatte ist eine flexible Säule angeordnet, um die die Kabel des Kabelstrangs angeordnet sind. Bei einer Verdrillung der Kabel wickeln sich diese um die Säule. Weiter ist die untere Abstandshalterplatte an einer Gleitvorrichtung angeordnet, die eine Bewegung senkrecht zur Verdrillrichtung erlaubt. Der Einbau der oberen und der unteren Abstandshalterplatte mitsamt der Säule in den Kabelstrang ist aufwendig und erfordert strukturelle Änderungen an der Gondel.

Der Erfindung liegt die Aufgabe zugrunde, eine Windenergieanlage der eingangs genannten Art dahingehend zu verbessern, um eine verbesserte Kabelübertragung zwischen Turm und Gondel zu schaffen, die weniger aufwendig ist.

Die erfindungsgemäße Lösung liegt in den Merkmalen des unabhängigen Anspruchs. Vorteilhafte Weiterbildungen sind Gegenstand der abhängigen Ansprüche.

Bei einer Windenergieanlage mit einem Turm und einer Gondel, die oben auf dem Turm in Azimuthrichtung schwenkbar angeordnet ist, sowie einer Mehrzahl von Kabeln, die verdrillbar über eine Schlaufe vom Turm in die Gondel geführt sind, wobei die Kabel in der Schlaufe mittels drehfester und loser Halter voneinander beabstandet gehaltert sind, und die Halter jeweils Aufnahmen zur Befestigung der Kabel mit einem vorbestimmten Umfangsabstand aufweisen, ist erfindungsgemäß vorgesehen, dass die Halter einen unteren drehfesten Führungsring und einen fluchtenden oberen losen Führungsring umfassen, und eine Schlaufenführung dergestalt gebildet ist, dass die Schlaufe mittels des drehfesten unteren Führungsrings in einen gekrümmten unverdrillten Bereich und einen gestreckten Verdrill-Bereich unterteilt ist.

Kern der Erfindung ist der Gedanke, die einzelnen Kabel nicht nur hinsichtlich ihrer relativen Lage zueinander mittels der Halter zu kontrollieren, sondern auch die Art der durch die Schlaufenführung ermöglichten Beweglichkeit des Kabelstrangs im ganzen zu kontrollieren, und so eine funktionale Trennung zwischen Verdrillung und Verkürzung (Längenausgleich) zu schaffen. Zugrunde liegt die Erkenntnis, dass sich bei dem Schwenken der Gondel nur der verdrillte Bereich des Kabels verkürzt, und zwar wegen der schraubenlinienartigen Verformung der einzelnen Kabel. Bei herkömmlichen Schlaufen erstreckt sich die Verdrillung aber auch in den gekrümmten Bereich der Schlaufe hinein, so dass auch der gekrümmte Bereich an der Verkürzung teilnimmt. Dieser Bereich ist damit einer doppelten Belastung ausgesetzt, nämlich Verdrillung und Verkürzung. In diesem Bereich ist damit der Verschleiß erhöht. Hier setzt die Erfindung an. Sie sieht vor, mittels des drehfest angeordneten unteren Führungsrings die von der Gondel ausgehende Verdrillung zu stoppen und damit den gondelfern von ihm liegenden gekrümmten Bereich der Schlaufe vor Verdrillung zu schützen. Es wird also eine klare funktionale Trennung zwischen dem gestreckten und dem gekrümmten Bereich der Schlaufe vorgenommen: der gestreckte Bereich verdrillt sich und kann sich dabei verkürzen, während der gekrümmte Bereich allein als Längenausgleich zugunsten des gestreckten Bereichs fungiert. Das heißt, die Schlaufe braucht dank der Erfindung nur noch die Belastung aufzunehmen, die sich aus seiner Funktion als Längenausgleich ergibt, nicht mehr aber die Belastung aufgrund einer Verdrillung. Die verschleißfördernde Doppelbelastung des gekrümmten Bereichs der Schlaufe kann auf diese Weise einfach, aber effektiv verhindert werden.

Die Erfindung erreicht damit eine enorme Verringerung des Kabelverschleißes gerade in dem kritischen gekrümmten Bereich der Schlaufe. Dieser war bei der Konstruktion gemäß dem Stand der Technik nicht vor Verdrillung geschützt, sondern partizipierte in unkontrollierter Weise.

Nachfolgend seien einige verwendete Begriffe erläutert.

Unter fluchtend wird verstanden, dass die Führungsringe in einer Linie liegen. Dies verlangt nicht Koaxialität, sondern es soll genügen, wenn das Zentrum der vom losen Führungsring umschriebenen Fläche innerhalb der vom festen Führungsring umschriebenen Fläche liegt.

Drehfest ist ein Führungsring, der bei einem Verschwenken seine Winkelorientierung nicht ändert. Unter lose wird demgegenüber verstanden, dass der Führungsring beim Verschwenken seine Winkelorientierung entsprechend ändert (dies kann, muss aber nicht ein volles Mitdrehen sein).

Unter Schlaufe wird eine Führung des Kabels zwischen Turm und Gondel verstanden, die aus einem gekrümmten Bereich (der häufig einen Halbkreis bildet) und einem gestreckten Bereich, der sich im Wesentlichen gerade in Richtung der Orientierung der Schlaufe erstreckt. Die Orientierung einer Schlaufe ist hierbei durch die Richtung bestimmt, zu welcher die offene Seite des gekrümmten Bereichs liegt.

Eine Gegenschlaufe ist ein Kabelabschnitt, der schlaufenförmig verläuft und entgegengesetzt zur zwischen Gondel und Turm laufenden Schlaufe orientiert ist.

Unter Kompensation wird ein Ausgleich verstanden, der nicht unbedingt vollständig zu sein braucht, sondern zumindest zur Hälfte erfolgen soll.

Bei größeren und weniger elastischen Kabeln, insbesondere solchen mit einem Durchmesser von mehr als 15 mm, hat es sich bewährt eine eigene Längenausgleichseinrichtung vorzusehen. An sich bietet die Verlegung der Kabel in einer Schlaufe zwischen Turm und Gondel den erforderlichen Spielraum, um die durch die Verdrillung bewirkte Verkürzung der effektiven Kabellänge auszugleichen. Bei großen und nicht elastischen Kabeln ist dies aber mitunter nicht ausreichend, so dass durch die eigene Längenausgleichseinrichtung die Verkürzung der effektiven Kabellänge erreicht werden kann, ohne die Kabel zu belasten. Eine bewährte Ausführungsform der Längenausgleichseinrichtung ist in Gestalt eines hubveränderlichen Umlenkelements, um das die Schlaufe gelegt ist. Beim Verdrillen wird durch Anheben des Umlenkelements die Schlaufe verkleinert und damit die effektive Kabellänge verkürzt, während beim Entdrillen durch Absenken die Schlaufe wieder vergrößert und damit die effektive Kabellänge wieder erhöht wird.

Die Längenausgleichseinrichtung kann passiv oder aktiv ausgeführt sein. Unter passiv wird hier verstanden, dass sie selbsttätig auf die Verkürzung der effektiven Kabellänge reagiert. Eine bevorzugte Ausführungsform ist die Anordnung der Schlaufenumlenkung an einer Wippe, so dass durch deren Anheben oder Absenken die Schlaufe verkleinert oder vergrößert wird, wie oben beschrieben. Um die Wippe von der Gewichtskraft des hängenden Trums zu entlasten, ist vorzugsweise eine gesonderte Umlenkung vorgesehen, die eine GegenSchlaufe bildet. Damit kann die Wippe feinfühliger auf Längenverkürzung aufgrund Verdrillung reagieren. Alternativ oder zusätzlich kann auch vorgesehen sein, dass die Wippe mit einem Gegengewicht versehen ist, um die Wirkung der Gewichtskraft des hängenden Trums zumindest teilweise auszugleichen.

Bei einer aktiven Längenausgleichseinrichtung ist zweckmäßigerweise eine Steuereinrichtung vorgesehen, welche die effektive Verkürzung des Kabels aufgrund der Verdrillung bestimmt und einen Aktuator so betätigt, dass die Schlaufe entsprechend verkleinert bzw. vergrößert wird. Die Bestimmung der effektiven Verkürzung kann hierbei direkt oder indirekt erfolgen. So kann ein Sensor vorgesehen sein, der die auf die Schlaufe wirkende Zugkraft durch die Verdrillung bestimmt; es kann auch vorgesehen sein, dass die Verdrillung bestimmt wird - mittels eigener Sensoren oder aufgrund von Berechnungen - und daraus die erwartete effektive Verkürzung anhand der Kabelparameter bestimmt wird. Letzteres bietet den Vorteil, dass keine zusätzlichen Sensoren benötigt werden, sondern hierzu der in der Betriebssteuerung in der Regel ohnehin vorhanden Datenwert für den Verdrillungszustand verwendet werden kann. Bei Erreichen einer maximalen Verdrillung oder auch einer maximalen Verkürzung wird durch gezieltes Verschwenken der Gondel der Kabelstrang wieder entdrillt.

Vorzugsweise ist für den unteren Führungsring eine zweiseitige Lagerung vorgesehen. Sie kann den unteren Führungsring auch bei hohen Verdrillungsmomenten sicher stabilisieren, und damit den gekrümmten Bereich der Schlaufe vor der unerwünschten Belastung durch Verdrillung schützen. Besonders zweckmäßig ist eine diametral gegenüberliegende Anordnung der Lagerung. Vorzugsweise ermöglicht die Lagerung eine Verkippung um eine horizontale Achse, beispielsweise durch Verwendung von diametral gegenüberliegenden Lagerzapfen. Die Verkippung erlaubt eine günstige Führung der Kabel in der Schlaufe unabhängig von der Verkürzung wegen Verdrillung und der entsprechenden Position der Längenausgleichseinrichtung. Sie liefert damit einen weiteren Beitrag zur Belastungsverringerung.

Im einfachsten Fall genügen zwei Führungsringe, einer oben und einer unten. Es können aber auch ein oder mehrere weitere Führungsringe (Zwischenringe) vorgesehen sein, die dazwischen angeordnet sind. Dies bietet den Vorteil, dass auch bei größeren Kabellängen und -durchmessern die gewünschte schraubenlinienförmige Lage beibehalten werden kann. Meist werden die zusätzlichen Führungsringe lose angeordnet sein, damit sie sich in unterschiedlichem Maß abhängig von ihrer Positionierung zwischen dem oberen und unteren Führungsring mitdrehen können.

Zum Erreichen einer maximalen Verdrillung ist es günstig, die einzelnen Kabel etwa äquidistant an der Mantelfläche der Führungsringe anzuordnen. Dank des Abstands ist die Gefahr einer übermäßigen Erwärmung durch Zusammenballung stromführender Kabel minimiert. Einzelne Positionen können frei bleiben, um so Raum zur Aufnahme von Komponenten für die Befestigung oder Lagerung der Führungsringe zu schaffen. Mit Vorteil sind die Kabel an der inneren und äußeren Mantelfläche angeordnet. Dies ermöglicht eine raumsparende Anordnung der Kabel und damit die Verwendung von Führungsringen mit kleinerem Durchmesser. Es kann zweckmäßig sein, denselben Winkelabstand für die Anordnung der Kabel an innerer und äußerer Mantelfläche vorzusehen. Damit können Kabelpaare gebildet werden, beispielsweise aus zwei außen und einem innen angeordneten, welche einen besonders günstigen Feldlinienverlauf haben.

Der Führungsring weist zweckmäßigerweise einen Umfang auf, der größer ist als die summierte Dicke der entlang dem Umfang angeordneten Kabel, und zwar um einen Faktor von 1,7 bis 2,2. Es hat sich gezeigt, dass mit dieser Umfangsgröße sich ein optimales Verhältnis aus Raumbedarf und ausreichendem Abstand der einzelnen Kabel bei hoher Verdrillung ergibt.

Gemäß einer bevorzugten Ausführungsform, die gegebenenfalls gesonderten Schutz verdient, ist eine flexible Zugentlastung an der Gondel für die in den Turm hängenden Kabel vorgesehen. Sie ist mit Vorteil als ein das Kabel umschließendes Maschengeflecht ausgebildet, das an seinem oberen Ende eine Aufhängungseinrichtung aufweist. Dies ermöglicht eine gleichsam auch bei größeren Verdrillungen funktionssichere wie robuste Aufhängung der Kabel an der Gondel. Das Maschengeflecht erlaubt Flexibilität gegenüber Winkelauslenkungen wie sie beim Verdrillen auftreten und toleriert dabei auch Verdrillungen des Kabelabschnitts innerhalb des Maschengeflechts. Weiter bietet das Maschengeflecht den Vorteil, dass es sich bei hoher Last zuzieht und damit eine selbstsichernde Wirkung entfaltet. Es eignet sich besonders auch für große und schwere Kabel.

Als besonders vorteilhaft hat sich herausgestellt, die Kabel auch im weiteren Verlauf in der Gondel getrennt weiterzuführen. Insbesondere ist es bevorzugt, die Kabel durch metallische Träger so anzuordnen, dass sie nach Phasensystemen zusammengefasst und die jeweiligen Phasensysteme getrennt durch metallische Träger geführt werden, um induktive Aufheizungen des Trägers zu vermeiden. Durch eine derartige Anordnung wird die Strombelastbarkeit der Kabel durch eine geringere Erwärmung der Kabel erhöht. Beispielsweise kann der Reduktionsfaktor der Kabel von etwa 0,55 auf etwa 0,75 erhöht werden, während eine Fortführung des Kabelstrangs im Bereich der Gondel im Bündel zu einer Erhöhung des Reduktionsfaktors um etwa 10 % führt (siehe auch DIN VDE 0298 - Teil 4). Die höhere Strombelastbarkeit der Kabel ermöglicht, dass die Auswahl und Anzahl der Kabel in diesem Bereich hinsichtlich Auslastung und/oder Kosten optimiert werden kann.

Gemäß einer bevorzugten Ausführungsform können Signalkabel mit niedrigem Durchmesser aber im Inneren der Führungsringe frei hängend gebündelt geführt werden. Dieses hat den Vorteil, dass bei Schwingungsanregung des Turms die Signalkabel durch die Begrenzung des Führungsrings nicht so starke Schwingungen ausführen können und daher mechanisch weniger stark belastet werden.

Die Erfindung wird nachfolgend am Beispiel einer vorteilhaften Ausführungsform erläutert. Es zeigen:

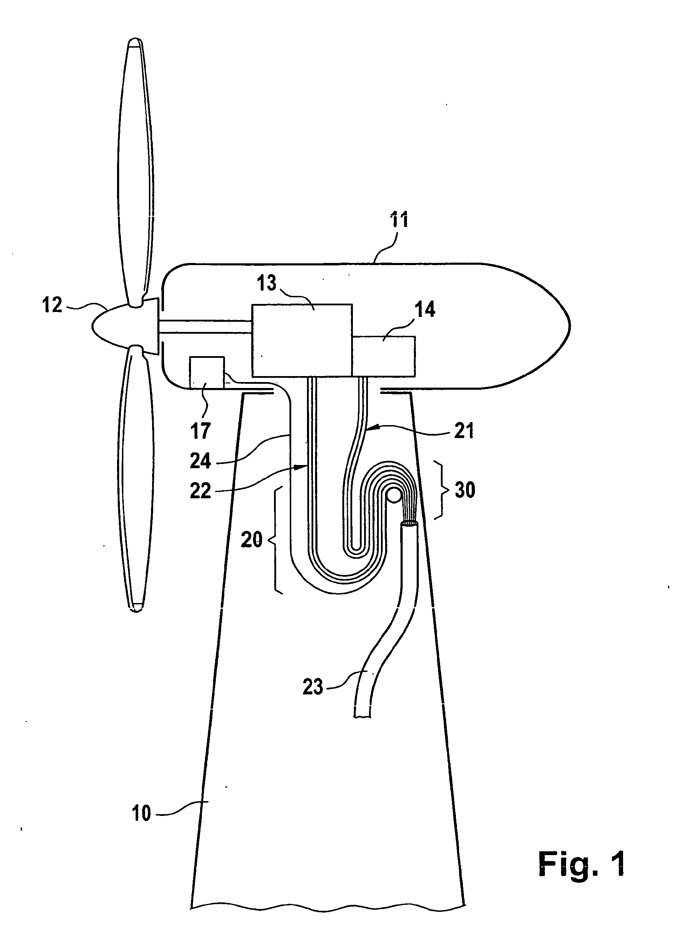

- Fig. 1:: eine schematische Darstellung einer Windenergieanlage gemäß einem Ausführungsbeispiel der Erfindung;
- Fig. 2:: eine perspektivische Ansicht der Führungsringe;
- Fig. 3:: eine erste Kabelanordnung an den Führungsringen;
- Fig. 4:: eine zweite Kabelanordnung an den Führungsringen;
- Fig. 5 a)-c): geometrische Darstellung zur Kabelverdrillung;
- Fig. 6:: eine Zugentlastung für die Kabel;
- Fig. 7:: eine vergrößerte Teilansicht der Schlaufenführung und Längenausgleichseinrichtung; und
- Fig. 8:: eine andere Teilansicht mit optionalen Zusätzen.

Ein Ausführungsbeispiel für eine Windenergieanlage gemäß der Erfindung umfasst einen Turm 10 mit einer Gondel 11 an seinem oberen Ende. Sie ist mittels eines Motors oder Lagers in Azimuthrichtung schwenkbar angeordnet und weist an ihrer Stirnseite einen drehbaren Windrotor 12 auf. Er treibt über eine Antriebswelle (nicht dargestellt) einen in der Gondel angeordnete Generator 13 mit einem Umrichter 14 an, welche die mechanische Antriebsleistung des Windrotors 12 in elektrische Leistung wandeln. Zur Abführung der erzeugten elektrischen Leistung ist ein Kabel in dem Turm 10 angeordnet, das eine Mehrzahl von Kabeln 21, 22 zum Anschluss an den Stator bzw. Rotor des Generators 13 (und ggf. weitere Signalkabel 24 zu einer Betriebssteuerung 17 der Windenergieanlage) und einen in dem Turm 10 nach unten hängenden Trum 23 umfasst. Die Kabel 21, 22 sind mit einer Schlaufe 20 und einer Gegenschlaufe 30 von der Gondel 11 in den Turm 10 geführt.

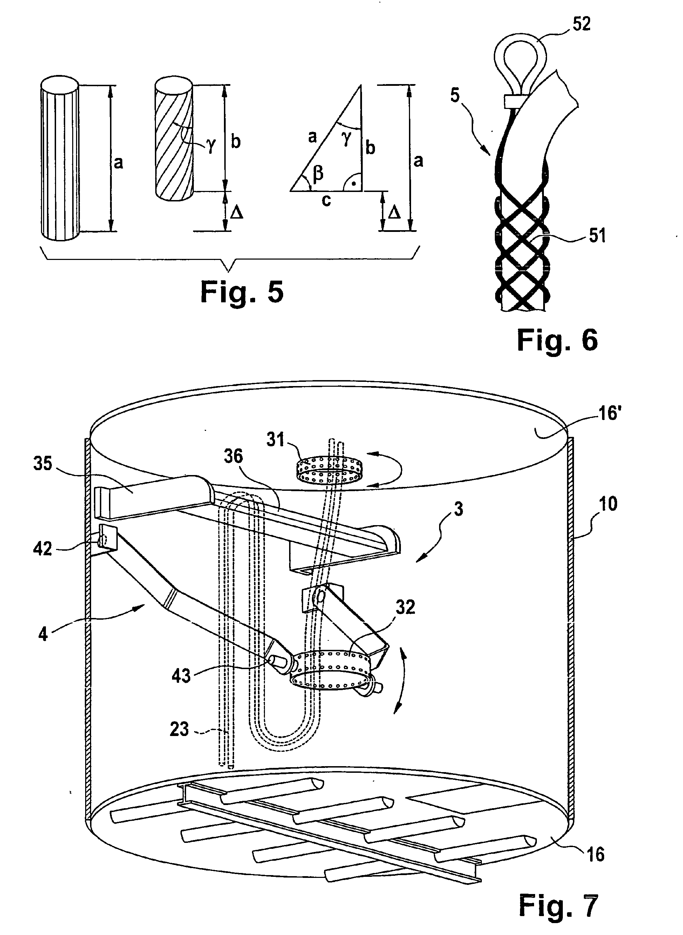

Es wird nun Bezug genommen auf Fig. 7, welche Einzelheiten zur Schlaufenführung 3 und Längenausgleichseinrichtung 4 zeigt. Die Schlaufenführung 3 umfasst einen oberen und unteren Führungsring 31, 32, die übereinander koaxial mit einem Abstand von etwa 3 m angeordnet sind. Der untere Führungsring 32 ist drehfest an einer Wippe 41 der Längenausgleichseinrichtung 4 angeordnet, und zwar über ein beidseitig wirkendes Zapfenlager 43, bei dem sich die einzelnen Lagerzapfen diametral gegenüberliegen. Damit kann der untere Führungsring eine Kippbewegung ausführen, ist jedoch gegenüber einer Verdrehung um seine Mittelachse gesichert. Er bildet damit in rotatorischer Hinsicht ein Festlager für die Kabel 21, 22 und beschränkt somit die Verdrillung auf den darüber befindlichen gestreckten, nach oben zur Gondel 11 führenden Bereich der Kabel 21, 22. Der obere Führungsring 31 ist hingegen lose angeordnet, d. h. er ist nur an den Kabeln 21, 22 befestigt. Er kann damit der Verdrillung der Kabel 21, 22 beim Verschwenken der Gondel 11 frei folgen und bildet damit in rotatorischer Hinsicht ein Loslager. Er erlaubt damit die Verdrillung des gestreckten Bereichs.

Die Wippe 41 ist über ein Schwenklager 42 an der Innenseite des Turms 10 befestigt. Die Wippe 41 kann sich im Turm 10 auf- und ab bewegen, so dass der an ihrem freien Ende angeordnete untere Führungsring 32 sich zu dem oberen Führungsring 31 hin bzw. von ihm wegbewegt. Aufgrund dieser Abstandsveränderung zwischen den beiden Führungsringen 31, 32 ändert sich die Größe der von den Kabeln 21, 22 gebildeten Schlaufe 20. Weiter ist eine Umlenkung 35 vorgesehen, über welche die Gegenschlaufe 30 geführt ist und von wo sie übergeht in den in den Turm 10 hängenden Trum 23. Die Umlenkung 35 nimmt das Gewicht des hängenden Trums auf und hält damit die Schlaufe mit der Längenausgleichseinrichtung 4 weitgehend frei von negativen Einflüssen aus der Gewichtskraft des hängenden Trums. Zu diesem Zweck kann die Umlenkung 35 mit einer reibungserhöhenden Beschichtung 36 versehen sein, oder es kann durch Befestigungseinrichtungen für eine ausreichend feste Anpressung des Kabelbündels 23 gesorgt werden.

Die Schlaufenführung 3 und die Längenausgleichseinrichtung 4 sind vorzugsweise zwischen zwei Zwischenböden 16, 16' angeordnet. Das gewährleistet einen guten Zugang für die Wartung. Dank der raumsparenden Konstruktion der Erfindung genügt ein Zwischenraum von etwa 5 m Höhe auch bei hohen Windenergieanlagen mit über 70 m hohen Türmen.

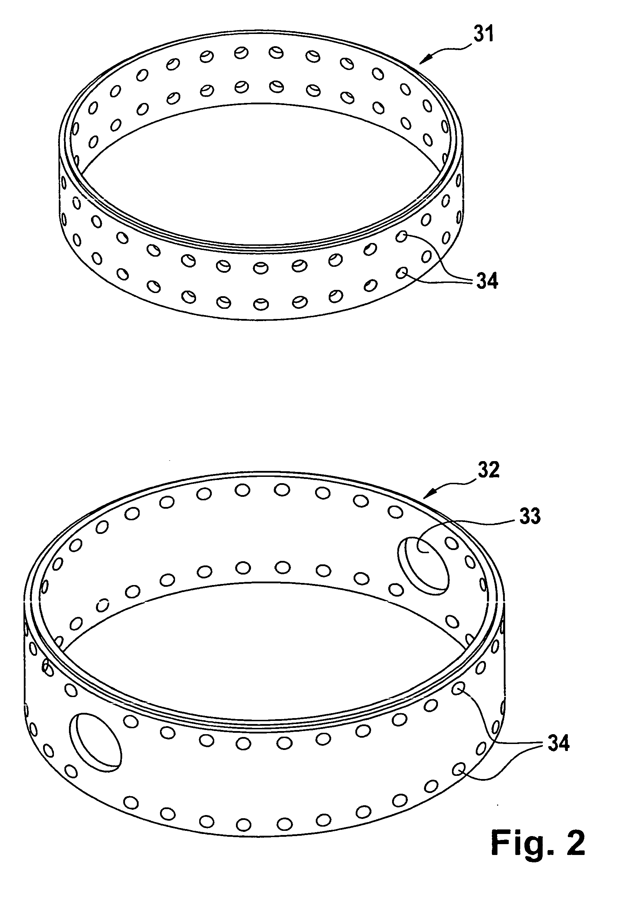

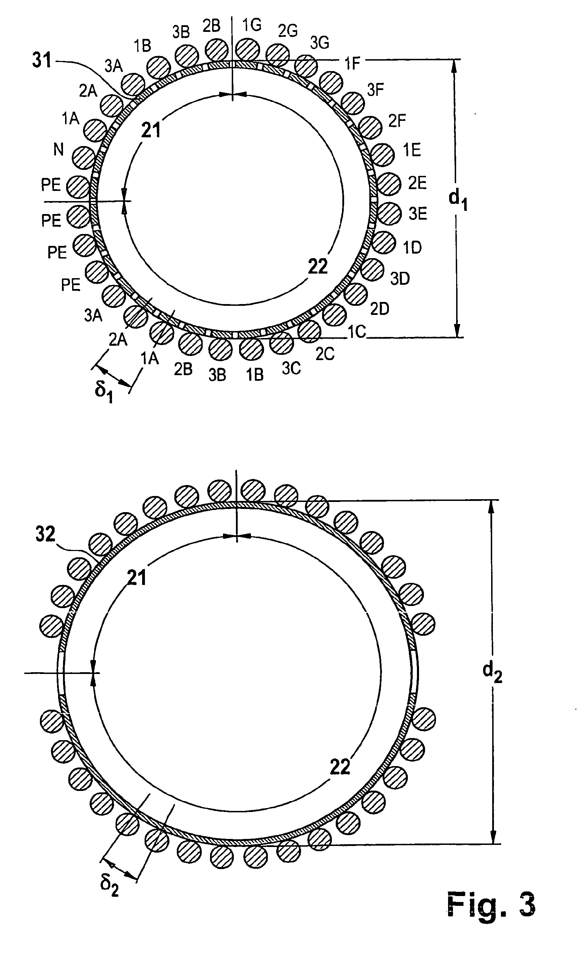

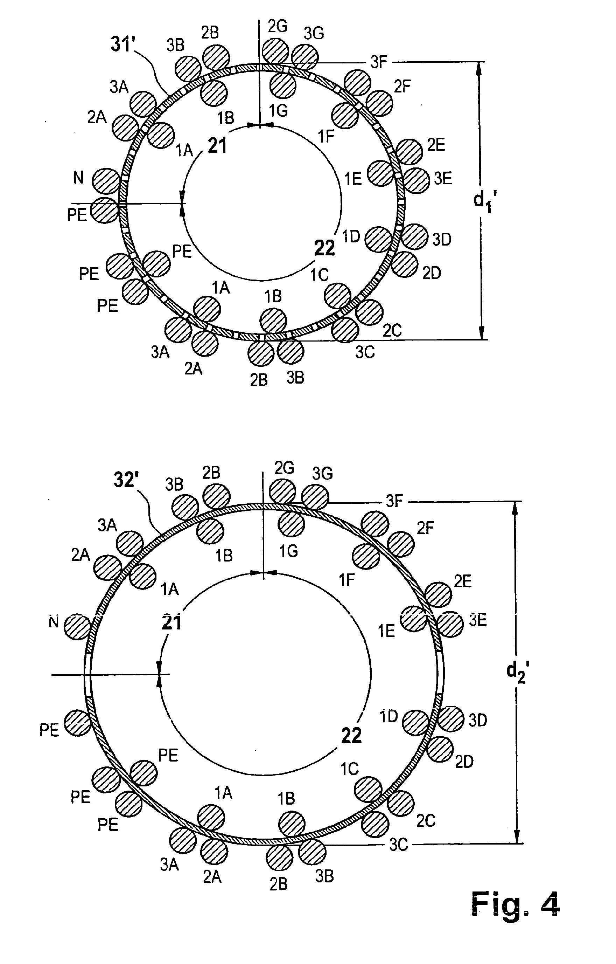

Einzelheiten zu den oberen und unteren Führungsringen 31, 32 sind in Fig. 2 dargestellt. Sie weisen verschiedene Durchmesser auf, wobei der obere einen Durchmesser d1 und der untere einen Durchmesser d2 aufweist. Sie umfassen eine Vielzahl von Radialbohrungen, die als Aufnahmen 34 für handelsübliche Befestigungseinrichtungen der einzelnen Kabel 21, 22 dienen. Die Aufnahmen 34 sind äquidistant an dem jeweiligen Ring angeordnet, wobei an dem unteren Führungsring 32 ein Freiraum 33 für die Aufnahme des Zapfenlagers 43 besteht. Die Abstände der Aufnahmen 34 an oberem und unterem Führungsring 31, 32 sind dabei so aufeinander abgestimmt, dass der Winkelabstand δ1 am oberen Führungsring 31 gleich ist zu dem Winkelabstand δ2 am unteren Führungsring 32. Dies ist in den Fig. 3 und 4 dargestellt. Die Kabel 21 zum Rotor und die Kabel 22 zum Stator sind gruppiert an der äußeren Mantelfläche des oberen bzw. unteren Führungsrings 31, 32 angeordnet (Fig. 3). Es kann auch vorgesehen sein, dass die Kabel 21, 22 beidseitig, also an der inneren und äußeren Mantelfläche angeordnet sind (Fig. 4). Dies hat den Vorteil, dass die Führungsringe 31', 32' kleinere Durchmesser d1' und d2' aufweisen können. Dies ermöglicht nicht nur eine raumsparende Konstruktion, sondern auch eine unter dem Gesichtspunkt der Verteilung der elektrischen und magnetischen Felder optimierte Anordnung in kompakten Dreiergruppen (bei einem üblichen Dreiphasensystem).

Die Bestimmung der Verdrillung und der Durchmesser der Führungsringe 31, 32 wird nachfolgend erläutert unter Bezugnahme auf die Fig. 5. In Fig. 5a ist der die Schlaufe 20 bildende Kabelabschnitt in unverdrilltem Zustand dargestellt, d. h. die Gondel 11 befindet sich in ihrer Normallage von 0° bezogen auf den Turm 10. Der die Schlaufe bildende Kabelabschnitt hat eine Länge a von 7m. Die einzelnen Kabel 21, 22 sind schematisiert durch Längsstriche in dem Kabelabschnitt dargestellt; im unverdrillten Zustand laufen sie achsparallel. In Fig. 5b ist derselbe Kabelabschnitt in verdrilltem Zustand dargestellt, und zwar für eine maximal zulässige Verdrillung von 1080° entsprechend drei vollen Umdrehungen zu einer beliebigen Seite. Die einzelnen Kabel 21, 22 liegen nun in einem Winkel γ aufgrund der Verdrillung (die Darstellung in Fig. 5b ist schematisiert; die i-dealisierte Lage entspricht der einer langgezogenen "Gewindebahn" an einer Schraube, wobei jedes Kabel 21, 22 für einen Gang des Gewindes steht). Wegen dieser Verdrillung verkürzt sich der Kabelabschnitt um den Betrag Δ, so dass seine effektive Länge nur noch b beträgt, wobei b = a - Δ ist. Der Zusammenhang zwischen den Strecken und den Winkeln ist in Fig. 5c dargestellt. Aufgrund der winkligen Lage vergrößert sich der seitliche Raumbedarf der einzelnen Kabel 21, 22, und zwar erhöht er sich um den Kehrwert des cos γ. Um eine Berührung der einzelnen Kabel 21, 22 auch bei maximaler Verdrillung zu vermeiden und damit den vollen Verschleißschutz aufrecht zu erhalten, müssen die einzelnen Kabel 21, 22 mit einem entsprechend großen Radialabstand an den Führungsringen angeordnet sein. Dazu folgendes Zahlenbeispiel:

Die Länge a betrage 7 m, und die maximale Verdrillung 1080°. Der Durchmesser des (kleineren) Führungsrings betrage 400 mm (Umfang 1370 mm) und der Durchmesser der einzelnen Kabel 36 mm. Am Ende des Kabelabschnitts ist damit das einzelne Kabel 21, 22 bei maximaler Verdrillung um eine radiale Strecke von 4,1 m verschoben. Dadurch verkürzt sich (Satz des Pythagoras) die effektive Länge des Kabelabschnitts auf einen Wert b von 5,67 m, d. h. der Kabelabschnitt verkürzt sich um Δ = 1,33 m. Damit ergibt sich für den Winkel β gemäß der Beziehung sin β = a/b (s. Fig. 5c) ein Wert von 54°, und für den Winkel γ= 90° - β ein Wert von 36°. Der in Radialrichtung des Führungsrings wirksame Durchmesser der einzelnen Kabel erhöht sich damit um den Kehrwert von cos γ, woraus sich ein wirksamer Durchmesser von 44 mm ergibt. Sind wie in Fig. 4 dargestellt 22 Kabel an der äußeren Mantelfläche angeordnet, ergibt sich somit ein Platzbedarf am Umfang von 22 x 44 mm = 978 mm, d. h. der tatsächliche Umfang von 1370 mm ist ausreichend groß. Damit ergibt sich ein Faktor von 1,72 zwischen summierten Durchmesser der einzelnen Kabel und tatsächlichem Umfang. Das unerwünschte Berühren der einzelnen Kabel kann auch bei maximaler Verdrillung sicher vermieden werden.

Für die Aufhängung der einzelnen Kabel 21, 22 an der Gondel ist zur Gewährleistung eines sicheren Halts und einer ausreichenden Bewegungsfreiheit eine flexible Zugentlastung vorgesehen, wie sie in Fig. 6 dargestellt ist. Sie umfasst ein Stück Maschengeflecht 51, das eng um das einzelne Kabel 21, 22 geschlungen ist. Durch die Reibungskraft ist das Kabel 21, 22 gegenüber einem Herausrutschen gesichert. Dank der Geflechtstruktur zieht sich das Maschengeflecht durch den vom Kabel 21, 22 ausgeübten Zug zusammen, so dass eine selbstsichernde Wirkung entsteht. Damit ist auch bei großen und schweren Kabeln ein sicherer Halt gewährleistet. Das Maschengeflecht behält dabei seine Flexibilität, so dass es eine ausreichende Verformbarkeit aufweist, um das Kabel auch unter der Wirkung der Verdrillung zu halten. Für die Befestigung ist eine Kausche 52 am oberen Ende vorgesehen, die mittels einer Schraube, Haken oder ähnlichem Befestigungselement an der Gondel 11 befestigt ist.

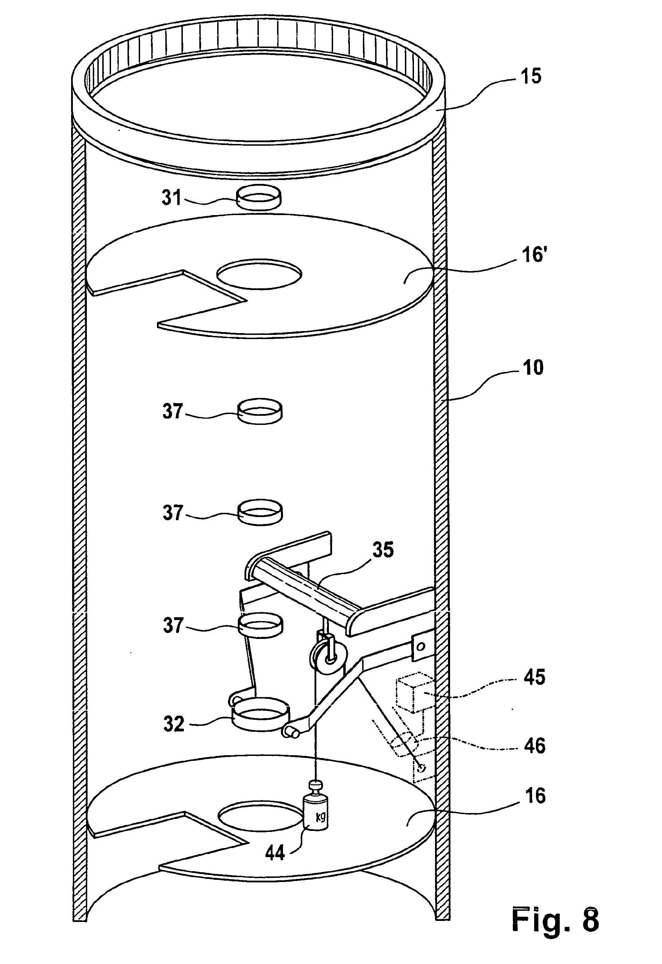

In Fig. 8 ist eine Übersicht für die Schlaufenführung 3 und die Längenausgleichseinrichtung 4 im Turm 10 dargestellt. Zusätzlich sind einige Optionen dargestellt. So sind zwischen dem oberen Führungsring 31 und dem unteren Führungsring 32 mehrere Zwischenringe 37 dargestellt. Sie sind wie der obere Führungsring 31 lose angeordnet. Während der obere Führungsring 31 in der Regel mit der Gondel 11 mitdreht, drehen sich die Zwischenringe 37 nur teilweise mit, wobei der Grad der Mitdrehung von oben nach unten abnimmt. Die Zwischenringe 37 sorgen dafür, dass die Positionierung der Kabel 21, 22 zueinander auch bei größeren Schlaufen erhalten bleibt.

Weiter ist ein Gegengewicht 44 für die Längenausgleichseinrichtung 4 dargestellt. Seine Masse ist so bemessen, dass unter Berücksichtigung der Hebelwirkung die Gewichtskraft des Kabels mindestens zur Hälfte ausgeglichen wird. Die Längenausgleichseinrichtung 4 kann damit weitgehend frei von negativen Einflüssen durch das Gewicht der Kabel 21, 22 betrieben werden. Alternativ kann eine aktive Kompensation vorgesehen sein (gestrichelt dargestellt). Sie umfasst eine Steuereinrichtung 45, die aus einem von der Betriebssteuerung 17 stammenden Signal über den Verdrillungswinkel die effektive verkürzte Kabellänge b bestimmt, und entsprechend die Wippe 41 über einen Aktuator 46 verstellt, um die Verkürzung Δ auszugleichen.

## Patentansprüche

1. Windenergieanlage mit einem Turm (10) und einer Gondel (11), die oben auf dem Turm (10) in Azimuthrichtung schwenkbar angeordnet ist, einer Mehrzahl von Kabeln (21, 22), die verdrillbar über eine Schlaufe (20) vom Turm (10) in die Gondel (11) geführt sind, wobei die Kabel (21, 22) in der Schlaufe (20) mittels drehfester und loser Halter voneinander beabstandet gehaltert sind, und die Halter jeweils Aufnahmen (34) zur Befestigung der Kabel (21, 22) mit einem vorbestimmten Umfangsabstand aufweisen,
**dadurch gekennzeichnet, dass**
die Halter einen unteren drehfesten Führungsring (32) und einen fluchtenden oberen losen Führungsring (31) umfassen, und eine Schlaufenführung (3) dergestalt gebildet ist, dass die Schlaufe mittels des drehfesten unteren Führungsrings (32) in einen gekrümmten unverdrillten Bereich und einen gestrecklten Verdrill-Bereich unterteilt ist.

2. Windenergieanlage nach Anspruch 1,
**dadurch gekennzeichnet, dass**
eine Längenausgleichseinrichtung (4) vorgesehen ist, welche den unteren Führungsring (32) je nach Verdrillungswinkel zu dem oberen Führungsring (31) bewegt.

3. Windenergieanlage nach Anspruch 2,
**dadurch gekennzeichnet, dass**
die Längenausgleichseinrichtung (4) mit einer Umlenkung (35) zusammenwirkt, die eine Gegenschlaufe (30) bildet und die Gewichtskraft eines hängenden Trums (23) der Kabel aufweist.

4. Windenergieanlage nach Anspruch 2 oder 3,
**dadurch gekennzeichnet, dass**
die Längenausgleichseinrichtung (4) ein Gegengewicht (44) aufweist, das zur Kompensation einer Gewichtskraft des hängenden Trums (23) ausgebildet ist.

5. Windenergieanlage nach Anspruch 2,
**dadurch gekennzeichnet, dass**
eine Steuereinrichtung (45) eine durch die Verdrillung bewirkte Belastung der Kabel (21, 22) bestimmt und einen Aktuator (46) so betätigt, um die Schlaufe (20) zu verkürzen.

6. Windenergieanlage nach einem der vorangehenden Ansprüche,
**dadurch gekennzeichnet, dass**
eine zweiseitige Lagerung (43) für den Führungsring (32) vorgesehen ist, welche vorzugsweise eine Verkippung um eine horizontale Achse erlaubt.

7. Windenergieanlage nach einem der vorangehenden Ansprüche,
**dadurch gekennzeichnet, dass**
mindestens ein zusätzlicher mittlerer Führungsring (37) vorgesehen, der vorzugsweise lose ist.

8. Windenergieanlage nach einem der vorangehenden Ansprüche,
**dadurch gekennzeichnet, dass**
Aufnahmen (34) für die Kabel (21, 22) vorzugsweise äquidistant an einer Mantelfläche der Führungsringe (31, 32) angeordnet sind.

9. Windenergieanlage nach Anspruch 8,
**dadurch gekennzeichnet, dass**
die Aufnahmen (34) beidseitig an einer inneren und äußeren Mantelfläche angeordnet sind.

10. Windenergieanlage nach einem der vorangehenden Ansprüche,
**dadurch gekennzeichnet, dass**
der lose Führungsring (31) einen kleineren Durchmesser als der feste Führungsring (32) aufweist.

11. Windenergieanlage nach einem der vorangehenden Ansprüche,
**dadurch gekennzeichnet, dass**
der Führungsring (31, 32) einen Umfang aufweist, der um den Faktor 1,4 bis 2,8 und vorzugsweise 1,7 bis 2,2 größer ist als die summierte Dicke der Kabel (21, 22).

12. Windenergieanlage nach einem der vorangehenden Ansprüche,
**dadurch gekennzeichnet, dass**
eine flexible Zugentlastung (5) an der Gondel (11) für die in den Turm (10) hängenden Kabel (21, 22) vorgesehen ist.

13. Windenergieanlage nach Anspruch 12,
**dadurch gekennzeichnet, dass**
die Zugentlastung (5) ein das Kabel umschließendes Maschengeflechtstück (51) ist, welches an seinem oberen Ende eine Aufhängungseinrichtung (52) aufweist.

## Claims

1. Wind energy installation having a tower (10) and a nacelle (11) which is arranged at the top on the tower (10) such that it can swivel in the azimuth direction, having a plurality of cables (21, 22) which are guided twistably via a loop (20) from the tower (10) into the nacelle (11), with the cables (21, 22) being held at a distance from one another in the loop (20) by means of rotationally fixed and loose holders, and with the holders each having receptacles (34) for attachment of the cables (21, 22) with a predetermined circumferential separation,
**characterized in that**
the holders comprise a lower rotationally fixed guide ring (32) and an aligning upper loose guide ring (31) and a loop guide (3) is formed such that the loop is subdivided by means of the rotationally fixed lower guide ring (32) into a curved untwisted area and an extended twisted area.

2. Wind energy installation according to Claim 1, **characterized in that** a length compensation device (4) is provided, which moves the lower guide ring (32) with respect to the upper guide ring (31) depending on the twist angle.

3. Wind energy installation according to Claim 2, **characterized in that** the length compensation device (4) interacts with a direction change (35) which forms an opposing loop (30) and has the weight force of a hanging section (23) of the cables.

4. Wind energy installation according to Claim 2 or 3, **characterized in that** the length compensating device (4) has a counterweight (44), which is designed to compensate for a weight force of the hanging section (23).

5. Wind energy installation according to Claim 2, **characterized in that** a control device (45) determines a load acting on the cables (21, 22) because of the twisting and operates an actuator (46) in order to shorten the loop (20).

6. Wind energy installation according to one of the preceding claims, **characterized in that** a two-sided bearing (43) is provided for the guide ring (32) and preferably allows tilting about a horizontal axis.

7. Wind energy installation according to one of the preceding claims, **characterized in that** at least one additional central guide ring (37) is provided, and is preferably loose.

8. Wind energy installation according to one of the preceding claims, **characterized in that** receptacles (34) for the cables (21, 22) are preferably arranged at equal intervals on an envelope surface of the guide rings (31, 32).

9. Wind energy installation according to Claim 8, **characterized in that** the receptacles (34) are arranged on both sides on an inner and an outer envelope surface.

10. Wind energy installation according to one of the preceding claims, **characterized in that** the loose guide ring (31) has a smaller diameter than the fixed guide ring (32).

11. Wind energy installation according to one of the preceding claims, **characterized in that** the guide ring (31, 32) has a circumference which is greater by a factor of 1.4 to 2.8, and preferably 1.7 to 2.2, than the added thickness of the cables (21, 22).

12. Wind energy installation according to one of the preceding claims, **characterized in that** flexible strain relief (5) is provided on the nacelle (11) for the cables (21, 22) which are hanging into the tower (10).

13. Wind energy installation according to Claim 12, **characterized in that** the strain relief (5) is a mesh piece (51) which surrounds the cable and has a suspension device (52) at its upper end.

## Revendications

1. Installation éolienne avec une tour (10) et une nacelle (11) disposée en haut de la tour (10) de manière pivotante dans la direction azimutale, une pluralité de câbles (21, 22), qui sont guidés, de manière torsadée, par une boucle (20) de la tour (10) vers la nacelle (11), les câbles (21, 22) étant maintenus éloignés entre eux dans la boucle (20) à l'aide de supports fixes en rotation et libres, et les supports comprennent des logements (34) pour la fixation des câbles (21, 22) à des intervalles prédéterminés sur la circonférence,
**caractérisé en ce que**
les supports comprennent une bague de guidage inférieure (32) fixe en rotation et une bague de guidage supérieure (31) libre alignée et un guidage de boucle (3) est conçu de façon à ce que la boucle soit divisée, par la bague de guidage inférieure (32) fixe en rotation, en une partie incurvée non torsadée et une partie torsadée étirée.

2. Installation éolienne selon la revendication 1, **caractérisé en ce qu'**un dispositif de compensation de la longueur (4) est prévu, qui déplace la bague de guidage inférieure (32) en fonction de l'angle de torsion par rapport à la bague de guidage supérieure (31).

3. Installation éolienne selon la revendication 2, **caractérisé en ce que** le dispositif de compensation de la longueur (4) interagit avec un renvoi (35) qui forme une contre-boucle (30) et qui compense la force de gravité d'un brin suspendu (23) du câble.

4. Installation éolienne selon la revendication 2 ou 3, **caractérisé en ce que** le dispositif de compensation de la longueur (4) comprend un contrepoids (44) qui est conçu pour compenser la force de gravité du brin suspendu (23).

5. Installation éolienne selon la revendication 2, **caractérisé en ce qu'**un dispositif de commande (45) détermine une sollicitation du câble (21, 22) due à la torsion et commande un actionneur (46) afin de raccourcir la boucle (20).

6. Installation éolienne selon l'une des revendications précédentes, **caractérisé en ce qu'**un roulement bilatéral (43) est prévu pour la bague de guidage (32), qui permet de préférence un basculement autour d'un axe horizontal.

7. Installation éolienne selon l'une des revendications précédentes, **caractérisé en ce qu'**au moins une bague de guidage centrale (37) supplémentaire est prévue, qui est de préférence libre.

8. Installation éolienne selon l'une des revendications précédentes, **caractérisé en ce que** des logements (34) sont disposés pour les câbles (21, 22), de préférence de manière équidistante sur une surface externe des bagues de guidage (31, 32).

9. Installation éolienne selon la revendication 8, **caractérisé en ce que** les logements (34) sont disposés des deux côtés, sur les surfaces externes intérieure et extérieure.

10. Installation éolienne selon l'une des revendications précédentes, **caractérisé en ce que** la bague de guidage libre (31) présente un diamètre inférieur à celui de la bague de guidage fixe (32).

11. Installation éolienne selon l'une des revendications précédentes, **caractérisé en ce que** la bague de guidage (31, 32) présente une circonférence qui est supérieure d'un facteur de 1,4 à 2,8, de préférence de 1,7 à 2,2 à l'épaisseur totale des câbles (21, 22).

12. Installation éolienne selon l'une des revendications précédentes, **caractérisé en ce qu'**une décharge de traction flexible (5) est prévue sur la nacelle (11) pour les câbles (21, 22) suspendus dans la tour (10).

13. Installation éolienne selon la revendication 12, **caractérisé en ce que** la décharge de traction (5) est un élément à mailles (51) entourant le câble, qui comprend, au niveau de son extrémité supérieure, un dispositif de suspension (52).
